# EUROPÄISCHE PATENTANMELDUNG

(11) **EP 4 163 192 A1**
(43) Veröffentlichungstag der Anmeldung: **12.04.2023**
(21) Anmeldenummer: 22199109.4
(22) Anmeldetag: 30.09.2022
(51) Int. Cl.: B62D 25/08, B60R 19/12

(54) **VORBAUSTRUKTUR FÜR EIN KRAFTFAHRZEUG MIT EINER VOR EINEM KÜHLMODUL ANGEORDNETEN CRASH-STRUKTUR**

(30) Priorität: 11.10.2021 DE 102021126273
(71) Anmelder: MAN Truck & Bus SE, 80995 München (DE)
(72) Erfinder: Kondic, Darko, 80995 München (DE); Kusch, Willi, 88239 Wangen im Allgäu (DE); Schmitz, Andreas, 80995 München (DE); Wick, Michael, 80995 München (DE); Knyrim, Thomas, 80995 München (DE); Wilke, Florian, 80995 München (DE)
(74) Vertreter: v. Bezold & Partner Patentanwälte - PartG mbB

(57) **Zusammenfassung**

Die Erfindung betrifft eine Vorbaustruktur (10) für ein Kraftfahrzeug sowie ein Kraftfahrzeug mit einer entsprechenden Vorbaustruktur (10). Die Vorbaustruktur (10) weist dabei zwei Rahmen-Längsträger (11, 12) mit je einem vorderen Ende (11a, 12a) auf. Bevorzugt umfasst die Vorbaustruktur (10) ein Kühlmodul (13), das am den jeweiligen vorderen Enden (11a, 12a) der Rahmen-Längsträgers (11, 12) gelagert ist und das sich quer zu den Rahmen-Längsträgern (11, 12) erstreckt. Weiterhin weist die Vorbaustruktur (10) eine Crash-Struktur (14) auf, die vorzugsweise zum Schutz des Kühlmoduls (13) beim einem Aufprallereignis (z. B. bei einem Frontalaufprall) dient. Die Crash-Struktur (14) weist dazu ein erstes Deformationselement (14a) auf, das beim Aufprallereignis unter Abbau von Aufprallkräften deformierbar ist und das sich oberhalb und quer zu den beiden Rahmen-Längsträgern (11, 12) erstreckt. Bevorzugt ist vorgehen, dass das vorgenannte erste Deformationselement (14a) vor dem Kühlmodul (13) angeordnet ist.

## Beschreibung

Die Erfindung betrifft eine Vorbaustruktur für ein Kraftfahrzeug sowie ein Kraftfahrzeug mit einer ebensolchen Vorbaustruktur.

Im Stand der Technik sind Crash-Strukturen, welche den Fahrer und/oder Fahrzeugkomponenten (wie z. B. eine Hochvoltbatterie) eines Kraftfahrzeugs bei einem Aufprallereignis (z. B. bei einem Frontalaufprall auf ein vorausfahrendes Fahrzeug) vor ernsthaften Beschädigungen schützen, grundsätzlich bekannt.

Insbesondere bei Nutzfahrzeugen ist jedoch problematisch, dass mit den bekannten Ansätzen der Fahrer bzw. sensible Fahrzeugkomponenten oftmals nicht ausreichend gegen crashbedingte Beschädigungen im Fall eines Auffahrens des Nutzfahrzeugs auf einen vorausfahrenden bzw. stehenden Trailer geschützt sind, da die Unterkante des Hecks des Trailers nicht selten über dem Leiterrahmenniveau des Nutzfahrzeugs liegt. Folglich besteht hier ein Bedarf an einem Fahrzeugentwurf, welcher einen sicheren Crash- bzw. Auffahrschutz bietet und mit dem vorzugsweise die Nachteile herkömmlicher Techniken vermieden werden können.

Aufgabe der Erfindung ist es, eine derartige Lösung bereitzustellen. Insbesondere ist es dabei eine Aufgabe der Erfindung, eine verbesserte Technik zum Schutz von Fahrzeugkomponenten bei einem crashbedingten Auffahren eines Nutzfahrzeugs auf ein vorausfahrendes Fahrzeug bereitzustellen.

Diese Aufgaben können mit den Merkmalen der unabhängigen Ansprüche gelöst werden. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem ersten unabhängigen Lösungsansatz wird hierbei eine Vorbaustruktur für ein Kraftfahrzeug bereitgestellt. Bevorzugt handelt es sich bei der Vorbaustruktur um eine Vorbaustruktur für ein Nutzfahrzeug (z. B. eine Vorbaustruktur für einen Omnibus, einen Lastkraftwagen oder eine Sattelzugmaschine).

Die Vorbaustruktur weist zwei, vorzugsweise parallele, Rahmen-Längsträger (z. B. C-Profilträger) mit je einem vorderen Ende auf. Zur besseren Unterscheidung können diese im Folgenden als erster Rahmen-Längsträger mit einem ersten vorderen Ende und zweiter Rahmen-Längsträger mit einem zweiten vorderen Ende bezeichnet werden. Bevorzugt kann der erste und/oder zweite Rahmen-Längsträger Teil eines Fahrzeugrahmens (z. B. eines Leiterrahmens) sein. Beispielsweise kann der erste und/oder zweite Rahmen-Längsträger für eine Befestigung zumindest einer Achse und/oder eines Aufbaus des Kraftfahrzeugs ausgelegt sein.

Vorzugsweise umfasst die Vorbaustruktur ferner ein Kühlmodul, das am ersten vorderen Ende des ersten Rahmen-Längsträgers gelagert (z. B. angeschraubt) ist und/oder am zweiten vorderen Ende des zweiten Rahmen-Längsträgers gelagert (z. B. angeschraubt) ist. Ferner kann sich das, vorzugsweise vorfertigbare bzw. vormontierbare, Kühlmodul quer zum ersten und/oder zweiten Rahmen-Längsträgern erstrecken. Lediglich beispielhaft kann das Kühlmodul senkrecht zum ersten und zweiten Rahmen-Längsträger orientiert sein.

Weiterhin umfasst die Vorbaustruktur eine Crash-Struktur, vorzugsweise zum Schutz des Kühlmoduls bei einem Aufprallereignis (z. B. bei einem Frontalaufprall). Die Crash-Struktur weist dabei ein Deformationselement (z. B. eine Crash-Strebe) auf, wobei das Deformationselement im Folgenden zur besseren Unterscheidbarkeit als erstes Deformationselement bezeichnet werden kann. Das erste (z. B. aus Stahl oder aus kohlenstofffaserverstärktem Kunststoff (CFK) bestehende) Deformationselement (z. B. ein Hohlprofil) soll hierbei bei einem, vorzugsweise vorbestimmten, Aufprallereignis (z. B. bei einem Frontalaufprall) unter Abbau von Aufprallkräften deformierbar sein. Unter dem Ausdruck "Deformationselement" kann somit bevorzugt ein Bauteil (oder eine Baugruppe) verstanden werden, dessen (deren) vorrangiger oder ausschließlicher Zweck die gezielte Absorption von Aufprallenergie im Falle eines Crashs (z. B. durch ein Umwandeln in Verformungsarbeit) ist. Das, vorzugsweise querstrebenartige, erste Deformationselement soll sich dabei oberhalb und quer zum ersten und/oder zweiten Rahmen-Längsträger erstrecken. Lediglich beispielhaft kann das erste Deformationselement dazu z. B. einen, vorzugsweise im Wesentlichen senkrecht zum ersten und zweiten Rahmen-Längsträger orientierten, Profilträger (z. B. ein gelochtes U-Profil oder Doppel-T-Profil) umfassen, der unmittelbar oder mittelbar an den jeweiligen Rahmen-Längsträgern gehaltert ist. Bevorzugt ist vorgehen, dass das vorgenannte erste Deformationselement vor dem Kühlmodul angeordnet ist. Dabei kann sich der Ausdruck "vor" bevorzugt auf die übliche Bedeutung dieses Begriffs bei einer Vorbaustruktur, die im vorderen Bereich (Frontbereich) des Kraftfahrzeugs angeordnet wird, beziehen, d. h., dass das erste Deformationselement bezüglich der Vorwärtsfahrtrichtung des Kraftfahrzeugs (mit montierter Vorbaustruktur) vor dem Kühlmodul angeordnet sein kann. Mit anderen Worten kann das Kühlmodul näher an einem, dem vorgenannten ersten vorderen Ende des ersten Rahmen-Längsträgers gegenüberliegendes erstes hinteres Ende des ersten Rahmen-Längsträgers angeordnet sein als das erste Deformationselement. Beispielsweise kann das erste Deformationselement benachbart zu einer den (ersten und zweiten) Rahmen-Längsträgern abgewandten Seite des Kühlmoduls angeordnet sein. Bevorzugt ist das erste Deformationselement hierbei unmittelbar vor dem Kühlmodul angeordnet, d. h., dass vorzugsweise keine weiteren Fahrzeugkomponenten (wie z. B. ein Motor, Druckluftanlage, etc.) zwischen dem ersten Deformationselement und dem Kühlmodul angeordnet sind. Auf vorteilhafte Weise kann dadurch insgesamt ein möglichst zuverlässiger Schutz des Kühlmoduls bzw. dahinter befindlicher Fahrzeugkomponenten (wie z. B. eine Traktionsbatterie) bereitgestellt werden. Insbesondere kann dadurch auf vorteilhafte Weise bei einem Frontalaufprall des Kraftfahrzeugs auf das Heck eines (z. B. vorausfahrenden) Sattelaufliegers, dessen Intrusion in das Kraftfahrzeug reduziert werden.

Nach einem ersten Aspekt kann das Kühlmodul einen oberen Kühlmodulbereich aufweisen, der oberhalb des ersten und/oder zweiten Rahmen-Längsträgers angeordnet ist. Mit anderen Worten kann sich das Kühlmodul zumindest bereichsweise bezüglich einer Hochachse der Vorbaustruktur oberhalb des ersten und/oder zweiten Rahmen-Längsträgers erstrecken. Als Hochachse der Vorbaustruktur kann dabei bevorzugt eine Achse eines (z. B. vorbaufesten) Koordinatensystems verstanden werden, die senkrecht zu einem, vorzugsweise beiden, Rahmen-Längsträger verläuft und in der, vorzugsweise mittig zwischen den zwei Rahmen-Längsträgern verlaufende, Vorbaumittelebene liegt. Aufgrund der vorbestimmten Einbaulage der Vorbaustruktur im Kraftfahrzeug kann die Hochachse (im montierten Zustand) auch der Gierachse des Kraftfahrzeugs entsprechen und/oder entgegen der Schwerkraftrichtung orientiert sein. Weiterhin kann vorgesehen sein, dass das erste Deformationselement zumindest teilweise auf Höhe des oberen Kühlmodulbereichs angeordnet ist. Bevorzugt kann sich das erste Deformationselement somit zumindest abschnittsweise auf derselben Höhe wie der obere Kühlmodulbereich befinden. Auf vorteilhafte Weise kann dadurch ein zuverlässiger Schutz des Kühlmoduls bei einem Frontalaufprall des Kraftfahrzeugs auf einen (z. B. vorausfahrenden) Sattelauflieger ermöglicht werden.

Gemäß einem weiteren Aspekt kann das erste Deformationselement ein Deformationselement zum Schutz des Kühlmoduls bei einem Frontalaufprall des Kraftfahrzeugs auf einen Sattelauflieger sein. Bevorzugt kann das erste Deformationselement ein Deformationselement zum Schutz des Kühlmoduls bei einem Frontalaufprall des Kraftfahrzeugs auf ein Heck eines Sattelaufliegers sein. Dies kann z. B. über die Montagehöhe der Crash-Struktur erreicht werden, da Sattelauflieger bzw. deren Heckbereich in der Regel genormte Höhen aufweisen (z. B. Ladekanten typischerweise zwischen 1 und 1,5 m). Auf vorteilhafte Weise kann dadurch insgesamt ein sicherer Schutz des Kühlmoduls sowie ggf. dahinter befindlicher Komponenten (z. B. eine Traktionsbatterie) ermöglicht werden.

Nach einem weiteren Aspekt kann die Vorbaustruktur einen ersten Kühlerträger (z. B. in Form eines im Wesentlichen vertikal orientierten Stahlträgers) aufweisen, wobei das Kühlmodul mittels des ersten Kühlerträgers am ersten Rahmen-Längsträger gehaltert ist. Zudem oder alternativ kann die Vorbaustruktur auch einen zweiten Kühlerträger (z. B. in Form eines im Wesentlichen vertikal orientierten Stahlträgers) aufweisen, wobei das Kühlmodul mittels des zweiten Kühlerträgers am zweiten Rahmen-Längsträger gehaltert ist. Lediglich beispielhaft kann der erste und/oder zweite Kühlerträger dazu z. B. seitlich am Kühlmodul angeordnet sein. Bevorzugt dient der erste und/oder zweite Kühlerträger zur Abstützung des Kühlmoduls am ersten und/oder zweiten Rahmen-Längsträger. Beispielsweise kann der erste und/oder zweite Kühlerträger ferner mit zumindest einem, vorzugsweise quaderförmigen, Kühler (z. B. eine Ladeluft- oder Kühlmittelkühler) des Kühlmoduls verbunden sein. Weiterhin kann vorgesehen sein, dass das erste Deformationselement am ersten und/oder zweiten Kühlerträger befestigt ist. Lediglich beispielhaft kann das erste Deformationselement am ersten und/oder zweiten Kühlerträger z. B. angeschraubt, angenietet und/oder angeschweißt sein. Auf vorteilhafte Weise kann dadurch eine stabile Lagerung des ersten Deformationselements ermöglicht werden, während gleichzeitig der Kühlluftstrom zum Kühlmodul durch die Halterung des ersten Deformationselements möglichst wenig beeinflusst wird.

Gemäß einem weiteren Aspekt kann das erste Deformationselement mehrere, vorzugsweise aus Flachstahl gefertigte, Lamellen aufweisen. Als "Lamelle" kann dabei bevorzugt, gemäß dem allgemeinen Verständnis, eine dünne, flächige Strebe verstanden werden. Vorzugsweise sind die mehreren Lamellen dabei parallel (z. B. höhenversetzt) zueinander angeordnet. Durch das Vorsehen mehrere, vorzugsweise voneinander beabstandeter, Lamellen, kann auf vorteilhafte Weise (z. B. im Gegensatz zu einem einzigen durchgängigen Träger) einerseits ein ausreichender Schutz des Kühlmoduls erreicht werden, andererseits jedoch ein Kühlluftstrom zum Kühlmoduls möglichst wenig blockiert werden (z. B. indem die Kühlluft über Zwischenräume zwischen den Lamellen zum Kühlmodul gelangen kann).

Nach einem weiteren Aspekt können die vorgenannten mehreren Lamellen zumindest drei, vorzugsweise zumindest vier, Lamellen umfassen.

Zudem oder alternativ können die mehreren Lamellen beabstandet (z. B. äquidistant beabstandet) voneinander angeordnet sein. Bevorzugt sind die mehreren Lamellen dabei beabstandet (z. B. äquidistant beabstandet) übereinander angeordnet. Beispielsweise können die mehreren Lamellen planparallel versetzt (z. B. höhenversetzt) zueinander angeordnet sein. Mit anderen Worten können die Lamellen jeweils in zueinander parallelen Ebenen liegen, wobei bevorzugt die Ebenen in vertikaler Richtung, d. h. entlang einer Hochachse der Vorbaustruktur, zueinander verschoben angeordnet sind.

Zudem oder alternativ können die mehreren Lamellen jeweils einen Querschnitt aufweisen, der in vertikaler Richtung eine geringere Ausdehnung als in horizontaler Richtung aufweist. Mit anderen Worten können die mehreren Lamellen jeweils einen Querschnitt aufweisen, der entlang einer Hochachse der Vorbaustruktur eine geringere Ausdehnung besitzt als entlang einer Längsachse der Vorbaustruktur. D. h. die Lamellen können z. B. jeweils als flache Lamellen ausbildet sein.

Zudem oder alternativ können die mehreren Lamellen jeweils ein erstes Lamellenende und ein, vorzugsweise dem ersten Lamellenende gegenüberliegendes, zweites Lamellenende aufweisen. Bei dem ersten und zweiten Lamellenende kann es sich bevorzugt jeweils um ein distales Ende der jeweiligen Lamelle handeln. Hierbei kann vorgesehen sein, dass jeweils das erste Lamellenende am ersten Kühlerträger und/oder das zweite Lamellenende am zweiten Kühlerträger befestigt (z. B. angeschraubt, angenietet und/oder angeschweißt) ist.

Zudem oder alternativ können die mehreren Lamellen jeweils ausschließlich am ersten und/oder zweiten Kühlerträger befestigt sein. D. h. bevorzugt sollen keine weiteren Anbindungs- bzw. Halterungsstellen der Lamellen als die am ersten und/oder zweiten Kühlerträger bestehen.

Zudem oder alternativ können die mehreren Lamellen jeweils einen geraden Mittelabschnitt und zwei gebogene Endabschnitte umfassen. Beispielsweise können die Lamellen jeweils U-förmig ausgebildet sein.

Gemäß einem weiteren Aspekt kann das erste Deformationselement einen, vorzugsweise aus Profilstahl gefertigten, Profilträger (z. B. einen U-Profilträger oder einen Doppel-T-Profilträger) aufweisen. Unter dem Ausdruck "Profilträger" kann dabei bevorzugt ein in einer definierten Form gefertigtes stabförmiges Bauteil verstanden werden, wobei vorzugsweise der Querschnitt des Bauteils über seine gesamte Länge gleich ist.

Nach einem weiteren Aspekt kann der vorgenannte Profilträger ein, vorzugsweise gelochtes, U-Profil und/oder ein, vorzugsweise gelochtes, Doppel-T-Profil aufweisen.

Zudem oder alternativ kann der Profilträger Aussparungen, vorzugsweise kreisförmige Aussparungen, zur Gewichtsreduktion aufweisen. Beispielsweise kann der Profilträger hierzu eine Mehrzahl von Bohrungen, Löchern und/oder Ausstanzungen aufweisen. Neben einer Einsparung von Gewicht ermöglicht dieser Aspekt auf vorteilhafte Weise zusätzlich eine ausreichende Kühlluftzufuhr zum Kühlmodul (z. B. indem die Kühlluft über die Aussparungen zum Kühlmodul gelangen kann).

Zudem oder alternativ kann der Profilträger ein erstes Profilträgerende und ein, vorzugsweise dem ersten Profilträgerende gegenüberliegendes, zweites Profilträgerende aufweisen. Bei dem ersten und zweiten Profilträgerende kann es sich bevorzugt jeweils um ein distales Ende des Profilträgers handeln. Hierbei kann vorgesehen sein, dass das erste Profilträgerende am ersten Kühlerträger und/oder das zweite Profilträgerende am zweiten Kühlerträger befestigt (z. B. angeschraubt, angenietet und/oder angeschweißt) ist.

Zudem oder alternativ kann der Profilträger ausschließlich am ersten und/oder zweiten Kühlerträger befestigt sein. D. h. bevorzugt sollen keine weiteren Anbindungs- bzw. Halterungsstellen des Profilträgers als die am ersten und/oder zweiten Kühlerträger bestehen.

Gemäß einem weiteren Aspekt kann die Crash-Struktur ein weiteres Deformationselement (z. B. eine Crash-Strebe) aufweisen, welches im Folgenden als zweites Deformationselement bezeichnet werden kann. Das zweite (z. B. aus Stahl oder aus kohlenstofffaserverstärktem Kunststoff (CFK) bestehende) Deformationselement (z. B. ein Rundrohr) kann dabei bei einem, vorzugsweise vorbestimmten, Aufprallereignis (z. B. bei einem Frontalaufprall) unter Abbau von Aufprallkräften deformierbar sein. Weiterhin kann das zweite Deformationselement vor dem Kühlmodul und/oder auf Höhe des ersten und/oder zweiten Rahmen-Längsträgers angeordnet sein. Bevorzugt kann sich das zweite Deformationselement somit zumindest abschnittsweise auf derselben Höhe wie der erste und/oder zweite Rahmen-Längsträger befinden. In Hinblick darauf, dass das erste Deformationselement oberhalb der Rahmen-Längsträger angeordnet ist, kann durch das bevorzugt dazu höhenversetzt (auf Höhe der Rahmen-Längsträger) angeordnete zweite Deformationselement auf vorteilhafte Weise ein möglichst umfassender Schutz des dahinter angeordneten Kühlmoduls erreicht werden. Weiterhin bevorzugt ist vorgesehen, dass sich das zweite Deformationselement quer zum ersten und/oder zweiten Rahmen-Längsträger erstreckt. Lediglich beispielhaft kann das zweite Deformationselement dazu z. B. ein, vorzugsweise im Wesentlichen senkrecht zum ersten und zweiten Rahmen-Längsträger orientiertes, Rohrprofil umfassen, das unmittelbar oder mittelbar an den jeweiligen Rahmen-Längsträgern gehaltert ist. Durch das Vorsehen eines weiteren Deformationselements kann auf vorteilhafte Weise insgesamt der Schutz des Kühlmoduls bzw. ggf. dahinter befindlicher Fahrzeugkomponenten (wie z. B. eine Traktionsbatterie) erhöht werden.

Nach einem weiteren Aspekt kann sich das vorgenannte zweite Deformationselement quer zum ersten und/oder zweiten Rahmen-Längsträger erstrecken. Beispielsweise kann das zweite Deformationselement senkrecht zum ersten und/oder zweiten Rahmen-Längsträger orientiert sein.

Zudem oder alternativ kann das zweite Deformationselement den ersten und zweiten Rahmen-Längsträger miteinander verbinden. Beispielsweise kann ein erster distaler Endbereich des zweiten Deformationselements mit dem ersten Rahmen-Längsträger verbunden sein und ein zweiter distaler Endbereich des zweiten Deformationselements mit dem zweiten Rahmen-Längsträger verbunden sein.

Zudem oder alternativ kann das zweite Deformationselement senkrecht zum ersten und/oder zweiten Rahmen-Längsträger orientiert sein. Beispielsweise kann das zweite Deformationselement senkrecht auf dem ersten und/oder zweiten Rahmen-Längsträger stehen.

Zudem oder alternativ kann das zweite Deformationselement tiefer als das erste Deformationselement angeordnet sein. Mit anderen Worten kann das zweite Deformationselement bezüglich der Hochachse der Vorbaustruktur unterhalb des ersten Deformationselements angeordnet sein. Wie vorstehend bereits ausgeführt worden ist, kann durch die höhenversetzte Anordnung der beiden Deformationselemente ein möglichst umfassender Schutz des Kühlmoduls erreicht werden.

Gemäß einem weiteren Aspekt kann die Crash-Struktur eine Halterung (z. B. in Form mehrerer vertikale Streben) umfassen, mittels derer das erste Deformationselement am zweiten Deformationselement gehaltert ist. Bevorzugt kann das erste Deformationselement somit am zweiten Deformationselement abgestützt sein. Vorzugsweise ist das erste Deformationselement dabei ausschließlich am zweiten Deformationselement gehaltert, d. h. bevorzugt sollen keine weiteren Anbindungs- bzw. Halterungsstellen des ersten Deformationselements als die am zweiten Deformationselement bestehen. In diesem Zusammenhang kann das zweiten Deformationselement z. B. auch als ein Kombielement bzw. Kombiträger verstanden werden, das/der eine Doppelfunktion erfüllt, nämlich sowohl eine Schutzfunktion des Kühlmoduls als auch eine Haltefunktion für das erste Deformationselement. Des Weiteren kann so auf vorteilhafte Weise eine Anbindung des ersten Deformationselements an die Vorbaustruktur bereitgestellt werden, die im Crash-Fall eine direkte Lasteinleitung in den Rahmen bzw. die Rahmen-Längsträger unter Umgehen des Kühlmoduls bzw. dessen Kühlerträger ermöglicht.

Nach einem weiteren Aspekt kann die vorgenannte Halterung mehrere, vorzugsweise fünf, Halteelemente umfassen. Die, vorzugsweise jeweils vertikal orientierten, mehreren Halteelemente können dabei quer zu den Rahmen-Längsträgern verteilt angeordnet sein. Beispielsweise können die mehreren Halteelemente im Wesentlichen entlang einer Querachse der Vorbaustruktur orientiert sein, wobei die Querachse eine senkrecht zur Mittelebene Vorbaustruktur verlaufende Achse bezeichnen kann. Bevorzugt sind die mehreren Halteelemente quer zu den Rahmen-Längsträgern gleichmäßig verteilt (z. B. jeweils in einem festen Abstand zueinander) angeordnet. Auf vorteilhafte Weise kann so eine möglichst stabile Befestigung des ersten Deformationselements erreicht werden.

Zudem oder alternativ kann jedes der mehreren Halteelemente ein erstes Halteelementende und ein, vorzugsweise dem ersten Halteelementende gegenüberliegendes, zweites Halteelementende aufweisen. Jedes der ersten Halteelementenden kann dabei am ersten Deformationselement befestigt (z. B. angeschraubt, angenietet und/oder angeschweißt) sein. Zudem oder alternativ kann jedes der zweiten Halteelementenden am zweiten Deformationselement befestig (z. B. angeschraubt, angenietet und/oder angeschweißt) sein. Bevorzugt ist bei jedem der Halteelemente das jeweilige erste Halteelementende oberhalb des jeweiligen zweiten Halteelementendes angeordnet.

Gemäß einem weiteren Aspekt können die Halteelemente jeweils gekröpft ausgebildet sein. Bevorzugt weisen die Halteelemente somit an mindestens zwei Stellen eine Biegung auf. Besonders bevorzugt sind die Halteelemente dabei jeweils derart gekröpft ausgebildet, dass das erste Deformationselement, vorzugsweise planparallel, nach vorne versetzt zum zweiten Deformationselement gehaltert ist. Entsprechend können die jeweiligen Halteelemente in diesem Zusammenhang vorzugsweise auch als "nach vorne ausgekröpfte" Halteelemente bezeichnet werden. Auf vorteilhafte Weise kann dadurch erreicht werden, dass im Crash-Fall möglichst zunächst ein Lasteintrag in das erste, am zweiten gehalterten, Deformationselement erfolgt und dann verzögert ein Lasteintrag in das zurückversetzte zweite Deformationselement.

Um auf vorteilhafte Weise die Stabilität der Halterung weiter zu erhöhen, kann nach einem weiteren Aspekt die Halterung eine Querstrebe (z. B. in Form eines gelochten U-Profils) zur Versteifung, vorzugsweise Quer-Versteifung, der Halterung aufweisen. Dabei kann die Querstrebe die vorgenannten Halteelemente, vorzugsweise quer zu den Rahmen-Längsträgern, miteinander verbinden. Beispielsweise kann die Querstrebe dazu im Wesentlichen entlang einer Querachse der Vorbaustruktur orientiert sein und/oder senkrecht zum ersten und/oder zweiten Rahmen-Längsträger orientiert sein. Besonders bevorzugt ist die Querstrebe bezüglich einer Hochachse der Vorbaustruktur zwischen dem ersten und zweiten Deformationselement angeordnet. Mit anderen Worten kann die Querstrebe jeweils zwischen dem ersten und zweiten Halteelementende am jeweiligen Halteelement befestigt sein.

Gemäß einem weiteren Aspekt kann die Querstrebe ein, vorzugsweise gelochtes, U-Profil und/oder ein, vorzugsweise gelochtes, Doppel-T-Profil aufweisen.

Zudem oder alternativ kann die Querstrebe Aussparungen, vorzugsweise kreisförmige Aussparungen, zur Gewichtsreduktion aufweisen. Beispielsweise kann die Querstrebe hierzu eine Mehrzahl von Bohrungen, Löchern und/oder Ausstanzungen aufweisen. Neben einer Einsparung von Gewicht ermöglicht dieser Aspekt auf vorteilhafte Weise zusätzlich eine ausreichende Kühlluftzufuhr zum Kühlmodul (z. B. indem die Kühlluft über die Aussparungen zum Kühlmodul gelangen kann).

Zudem oder alternativ kann die Querstrebe auch ein Deformationselement (z. B. eine Crash-Strebe) aufweisen, welches im Folgenden zur besseren Unterscheidbarkeit als drittes Deformationselement bezeichnet werden kann. Das dritte (z. B. aus Stahl oder aus kohlenstofffaserverstärktem Kunststoff (CFK) bestehende) Deformationselement (z. B. ein Hohlprofilträger) kann dabei bei einem, vorzugsweise vorbestimmten, Aufprallereignis (z. B. bei einem Frontalaufprall) unter Abbau von Aufprallkräften deformierbar sein. Lediglich beispielhaft kann dabei die Querstrebe selbst als drittes Deformationselement ausgebildet sein. Alternativ kann die Querstrebe das dritte Deformationselement jedoch auch zusätzlich zu sonstigen Querversteigungsstrukturen umfassen. Bevorzugt erstreckt sich dabei auch das dritte Deformationselement quer zum ersten und/oder zweiten Rahmen-Längsträger und/oder ist bezüglich einer Hochachse der Vorbaustruktur zwischen dem ersten und zweiten Deformationselement angeordnet. Auf vorteilhafte Weise kann so der Schutz des Kühlmoduls sowie ggf. dahinter befindlicher Fahrzeugkomponenten weiter erhöht werden.

Nach einem weiteren Aspekt kann das erste Deformationselement einen einseitig gehalterten Querträger (z. B. einen Hohlprofilträger) umfassen. Der Querträger kann dabei ein erstes Querträgerende, das mit dem ersten Rahmen-Längsträger verbunden sein kann, und ein, vorzugsweise dem ersten Querträgerende gegenüberliegendes, freies zweites Querträgerende aufweisen. Unter dem Ausdruck "frei" kann dabei bevorzugt verstanden werden, dass das entsprechende Querträgerende keine Verbindung zu einem weiteren Bauteil aufweist, d. h., dass das entsprechende Querträgerende insbesondere nicht an einem weiteren Bauteil befestigt (z. B. angeschraubt, angenietet und/oder angeschweißt) ist. Mit anderen Worten kann der vorgenannte Querträger nur an einem seiner beiden Enden fixiert sein. Der Querträger kann dabei z. B. ein offenes Profil (z. B. ein U-Profil oder Doppel-T-Profil) oder ein geschlossenes Profil aufweisen. Beispielsweise kann der Querträger ein rohrförmiges Profil mit konzentrischem, rechteckigem, ovalem oder anderem geschlossenen Querschnitt aufweisen.

Gemäß einem weiteren Aspekt kann das erste Querträgerende über ein gekröpftes Verbindungsstück mit dem ersten oder zweiten Rahmen-Längsträger oder dem zweiten Deformationselement verbunden sein. Lediglich beispielhaft kann das Verbindungsstück dabei im Wesentlichen vertikal, d. h. entlang der Hochachse der Vorbaustruktur, orientiert sein. Bevorzugt weist das Verbindungsstück an mindestens zwei Stellen eine Biegung auf. Besonders bevorzugt dient das Verbindungsstück weiterhin dazu, den Querträger nach vorne, d. h. vom Kühlmodul weg, zu versetzen. Entsprechend das Verbindungsstück in diesem Zusammenhang vorzugsweise auch als "nach vorne ausgekröpftes" Verbindungsstück bezeichnet werden.

Zudem oder alternativ kann der Querträger senkrecht zum ersten und zweiten Rahmen-Längsträger orientiert sein.

Zudem oder alternativ kann die Crash-Struktur auch ein weiteres Deformationselement aufweist, welches zur besseren Unterscheidung als viertes Deformationselement bezeichnet werden kann. Das vierte Deformationselement kann dabei unterhalb und/oder, vorzugsweise planparallel, nach hinten versetzt zum vorgenannten Querträger angeordnet sein. Lediglich beispielhafte kann das vierte Deformationselement bezüglich einer Hochachse der Vorbaustruktur zwischen dem ersten Deformationselement (bzw. dem Querträger) und dem zweiten Deformationselement angeordnet sein. Bevorzugt kann das vierte Deformationselement den ersten und zweiten Rahmen-Längsträger miteinander verbinden. Beispielsweise kann das vierte Deformationselement ein erstes Deformationselementende und ein, vorzugsweise dem ersten Deformationselementende gegenüberliegendes, zweites Deformationselementende aufweisen, wobei das erste Deformationselementende am ersten Rahmen-Längsträger und das zweite Deformationselementende am zweiten Rahmen-Längsträger befestigt (z. B. angeschraubt, angenietet und/oder angeschweißt) ist. Bei dem ersten und zweiten Deformationselementende kann es sich bevorzugt jeweils um ein distales Ende des vierten Deformationselements handeln. Vorzugsweise erstreckt sich das vierte Deformationselement quer zum ersten und/oder zweiten Rahmen-Längsträger. Auf vorteilhafte Weise kann dadurch wiederum der Schutz des Kühlmoduls sowie ggf. dahinter befindlicher Fahrzeugkomponenten weiter erhöht werden.

Nach einem weiteren Aspekt kann das Kühlmodul zumindest einen, vorzugsweise quaderförmigen, Kühler (z. B. einen Ladeluftkühler, Wasserkühler, etc.) aufweisen. Der zumindest eine Kühler kann dabei von einem, vorzugsweise gasförmigen und/oder flüssigen, Wärmeträger durchströmbar sein. Der zumindest eine Kühler kann somit z. B. an einen Kühl- und/oder Kältemittelkreislauf des Kraftfahrzeugs anschließbar sein. Zudem oder alternativ kann der zumindest eine Kühler senkrecht zum ersten und/oder zweiten Rahmen-Längsträger orientiert sein. Zudem oder alternativ kann der zumindest eine Kühler einen Ladeluftkühler und/oder einen Kühlmittelkühler umfassen. Zudem oder alternativ kann der zumindest eine Kühler einen vorderen ersten Kühler und einen, vorzugsweise planparallel zum ersten Kühler angeordneten, hinteren zweiten Kühler umfassen.

Gemäß einem weiteren unabhängigen Aspekt wird ein Kraftfahrzeug bereitgestellt. Bevorzugt kann das Kraftfahrzeug ein Nutzfahrzeug sein, d. h. ein Fahrzeug, das durch seine Bauart und Einrichtung speziell zur Beförderung von Personen, zum Transport von Gütern und/oder zum Ziehen von Anhängerfahrzeugen ausgelegt ist. Beispielsweise kann das Kraftfahrzeug ein Omnibus, ein Lastkraftwagen oder eine Sattelzugmaschine sein. Besonders bevorzugt kann das Kraftfahrzeug ein Elektrofahrzeug und/oder ein batterieelektrisch angetriebenes Kraftfahrzeug sein. Das Kraftfahrzeug weist dabei eine Vorbaustruktur, wie in diesem Dokument beschrieben, auf. Mit anderen Worten kann das Kraftfahrzeug eine Vorbaustruktur umfassen, die wie in diesem Dokument beschrieben ausgebildet sein kann. Folglich sollen die jeweils im Zusammenhang mit der Vorbaustruktur beschrieben Merkmale auch im Zusammenhang mit dem Kraftfahrzeug als offenbart gelten und beanspruchbar sein. Entsprechendes soll auch umgekehrt gelten. Hierbei sie nochmals erwähnt, dass dabei sowohl die Vorbaustruktur selbst als auch das Kraftfahrzeug mit einer ebensolchen Vorbaustruktur jeweils mit einem Kühlmodul als auch ohne Kühlmodul ausgeführt sein können. Mit anderen Worten sollen sowohl die Vorbaustruktur als auch das Kraftfahrzeug jeweils auch ohne das Kühlmodul offenbart und beanspruchbar sein, wobei diese jeweiligen Gegenstände ansonsten alle weiteren in diesem Dokument beschrieben Merkmale aufweisen können.

Die zuvor beschriebenen Aspekte und Merkmale der Erfindung sind beliebig miteinander kombinierbar. Weitere Einzelheiten und Vorteile der Erfindung werden im Folgenden unter Bezugnahme auf die beigefügten Zeichnungen beschrieben. Es zeigen:
- Figur 1:: eine schematische Darstellung einer Vorbaustruktur gemäß einer ersten Ausführungsform;
- Figur 2:: eine schematische Darstellung einer Vorbaustruktur gemäß einer zweiten Ausführungsform;
- Figur 3:: eine schematische Darstellung einer Vorbaustruktur gemäß einer dritten Ausführungsform;
- Figur 4:: eine schematische Darstellung einer Vorbaustruktur gemäß einer vierten Ausführungsform; und
- Figur 5:: eine schematische Darstellung einer Vorbaustruktur gemäß einer fünften Ausführungsform.

Gleiche oder funktional äquivalente Elemente sind in allen Figuren mit denselben Bezugszeichen beschrieben und zum Teil nicht gesondert beschrieben.

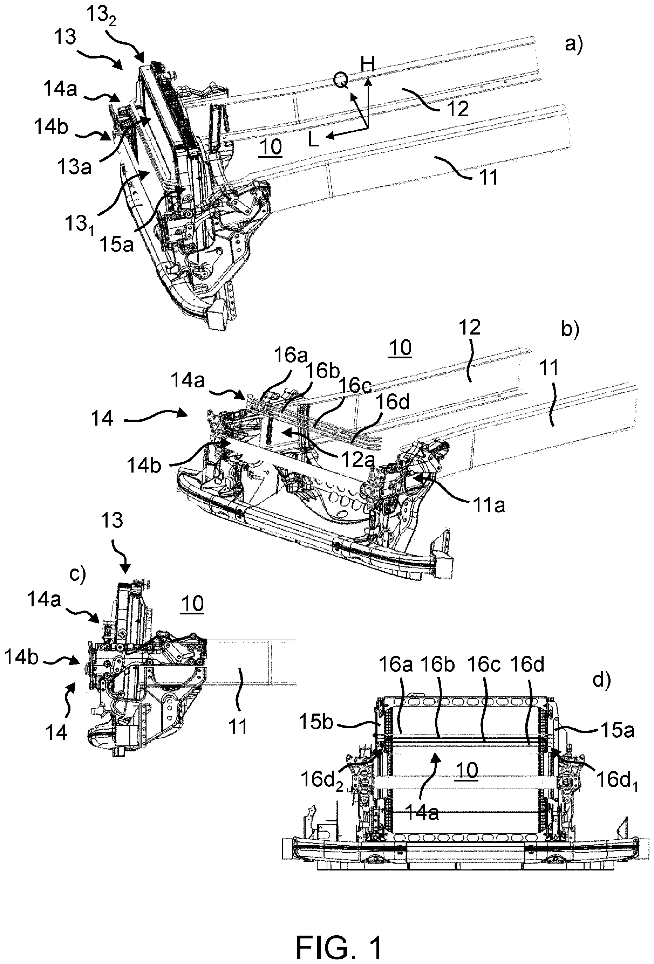

Bevor eingehender auf die speziellen Komponenten der jeweiligen Vorbaustrukturen 10 der Figuren 1 bis 5 eingegangen werden wird, sollen zunächst die allen Varianten gemeinsamen Merkmale beschrieben werden. So zeigen alle Figuren jeweils eine Vorbaustruktur 10 für ein Kraftfahrzeug, vorzugsweise ein Nutzfahrzeug. Als Vorbaustruktur 10 kann dabei - gemäß dem üblichen Verständnis - bevorzugt eine Struktur verstanden werden, die im montierten Zustand in einem Frontbereich des Kraftfahrzeugs angeordnet ist und die Teile einer Tragstruktur des Kraftfahrzeugs umfasst. Die Vorbaustrukturen 10 weisen dabei jeweils zwei, vorzugsweise parallele, Rahmen-Längsträger 11 und 12 (z. B. C-Profilträger) mit je einem vorderen Ende 11a und 12a auf. Zur besseren Unterscheidung können die zwei Rahmen-Längsträger 11, 12 im Folgenden auch als erster Rahmen-Längsträger 11 und zweiter Rahmen-Längsträger 12 bezeichnet werden bzw. das vordere Ende 11a des ersten Rahmen-Längsträgers 11 auch als erstes vorderes Rahmen-Längsträgerende 11a und das vordere Ende 12a des zweiten Rahmen-Längsträgers 12 als zweites vorderes Rahmen-Längsträgerende 12a. Hierbei kann sich der Ausdruck "vorne" bzw. "vordere" bevorzugt auf die übliche Bedeutung dieser Begriffe bei einer Vorbaustruktur 10, die im vorderen Bereich (Frontbereich) des Kraftfahrzeugs angeordnet wird, beziehen, d. h., dass das erste bzw. zweite vordere Ende bezüglich der Vorwärtsfahrtrichtung des Kraftfahrzeugs (mit montierter Vorbaustruktur) vorne am Kraftfahrzeug, d. h. im Bereich der Fahrzeugfront, angeordnet sein kann. Die vorgenannten Rahmen-Längsträger 11, 12 können hierbei ferner Teil eines Fahrzeugrahmens (z. B. eines Leiterrahmens) sein und bevorzugt zur Befestigung zumindest einer Achse und/oder eines Aufbaus des Kraftfahrzeugs dienen.

Weiterhin umfassen die Vorbaustrukturen 10 jeweils eine Crash-Struktur 14. Bevorzugt dient die Crash-Struktur 14 zum Schutz eines (nachfolgend eingehender beschriebenen) Kühlmoduls 13 bei einem Aufprallereignis (z. B. bei einem Frontalaufprall). Hierzu weist die Crash-Struktur 14 ein Deformationselement 14a (z. B. eine Crash-Strebe) auf, wobei dieses Deformationselement 14a im Folgenden zur besseren Unterscheidbarkeit auch als erstes Deformationselement 14a bezeichnet werden soll. Das erste (z. B. aus Stahl oder aus kohlenstofffaserverstärktem Kunststoff (CFK) bestehende) Deformationselement 14a (z. B. ein Hohlprofil) soll dabei bei einem, vorzugsweise vorbestimmten, Aufprallereignis (z. B. bei einem Frontalaufprall) unter Abbau von Aufprallkräften deformierbar sein. Das, vorzugsweise querstrebenartige, erste Deformationselement 14a erstreckt sich ferner oberhalb und quer zum ersten und/oder zweiten Rahmen-Längsträger 11, 12. Der Ausdruck "oberhalb" kann sich dabei bevorzugt auf eine Hochachse H der Vorbaustruktur 10 beziehen, d. h., dass das erste Deformationselement 14a jeweils auf einer Höhe angeordnet sein können, die über der des ersten und/oder zweiten Rahmen-Längsträgers 11, 12, vorzugsweise der Höhe deren Oberkanten, liegt. Der Ausdruck "quer" kann bevorzugt angeben, dass sich das erste Deformationselement 14a jeweils vom ersten Rahmen-Längsträger 11 zum zweiten Rahmen-Längsträger 12 (z. B. senkrecht oder schräg zu den Rahmen-Längsträgern 11, 12) erstreckt. Beispielsweise können die Rahmen-Längsträger 11, 12 über das erste Deformationselement 14a miteinander verbunden sein. Zudem oder alternativ kann das erste Deformationselement 14a im Wesentlichen entlang einer Querachse Q der Vorbaustruktur 10 orientiert sein, wobei die Querachse Q eine senkrecht zur Mittelebene Vorbaustruktur 10 verlaufende Achse bezeichnen soll.

Ferner kann das erste Deformationselement 14a ein oder mehrere Streben, vorzugsweise Querstreben, umfassen.

Ferner umfassen die in den Figuren 1 bis 5 dargestellten Vorbaustrukturen 10 jeweils ein Kühlmodul 13, das am ersten vorderen Ende 11a des ersten Rahmen-Längsträgers 11 gelagert (z. B. angeschraubt) ist und/oder am zweiten vorderen Ende 12a des zweiten Rahmen-Längsträgers 12 gelagert (z. B. angeschraubt) ist. Beispielsweise kann das, vorzugsweise vorfertigbare, Kühlmodul 13 mittels entsprechender Kühlerträger 15a, 15b des Kühlmoduls 13 am ersten und zweiten vorderen Rahmen-Längsträgerende 11a, 12a angeschraubt und/oder angenietet sei. Hierbei sei jedoch erwähnt, dass das Kühlmodul 13 - obwohl in den Figuren 1 bis 5 gezeigt - im Allgemeinen kein zwingender Bestandteil der beanspruchten Vorbaustruktur 10 sein muss, d. h. die Vorbaustruktur 10 auch ohne das Kühlmodul 13 ausgeführt sein kann.

Bevorzugt erstreckt sich auch das Kühlmodul 13 quer zum ersten und/oder zweiten Rahmen-Längsträger 11, 12, z. B. indem es senkrecht zum ersten und/oder zweiten Rahmen-Längsträger 11, 12 orientiert ist. Hierbei kann das Kühlmodul 13 den ersten und zweiten Rahmen-Längsträger 11, 12 miteinander verbinden und/oder im Wesentlichen entlang der Querachse Q der Vorbaustruktur 10 orientiert sein. Weiterhin kann das Kühlmodul 13 einen oberen Kühlmodulbereich 13a aufweisen, der oberhalb der beiden Rahmen-Längsträger 11, 12 angeordnet ist. Mit anderen Worten kann sich das Kühlmodul 13 zumindest abschnittsweise bezüglich einer Hochachse H der Vorbaustruktur 10 oberhalb der zwei Rahmen-Längsträger 11, 12 erstrecken. Ferner kann das Kühlmodul 13 - wie beispielhaft dargestellt - einen vorderen ersten Kühler 13₁ und einen, vorzugsweise planparallel zum ersten Kühler 13₁ angeordneten, hinteren zweiten Kühler 13₂ umfassen. Beispielsweise kann es sich bei dem ersten Kühler 13₁ um einen Ladeluftkühler und bei dem zweiten Kühler 13₂ um einen Kühlmittelkühler handeln.

Bevorzugt ist vorgehen, dass das vorgenannte erste Deformationselement 14a vor, vorzugsweise unmittelbar vor, dem Kühlmodul 13 angeordnet ist. Mit anderen Worten kann das erste Deformationselement 14a vorderseitig vom Kühlmodul 13 angeordnet sein. Als "vorderseitig" kann dabei bevorzugt eine der Vorderseite des Kühlmoduls 13 zugewandte Anordnung verstanden werden, wobei das Kühlmodul 13 hierzu eine Vorderseite, die in einer vorbestimmten Einbaulage der Vorbaustruktur 10 im Kraftfahrzeug vom Kraftfahrzeug wegweist (d. h. einer Umgebung des Kraftfahrzeugs zugewandt ist), und eine, der Vorderseite gegenüberliegende, Rückseite aufweisen kann. Anders ausgedrückt kann die Vorderseite des Kühlmoduls 13 im montierten Zustand der Vorbaustruktur 10 im Kraftfahrzeug einer Kühlluft-Strömung zugewandt sein und die Rückseite der Kühlluft-Strömung abgewandt sein. Weiterhin ist bevorzugt vorgesehen, dass sich das erste Deformationselement 14a zumindest abschnittsweise auf derselben Höhe wie der obere Kühlmodulbereich 13a befindet. Auf vorteilhafte Weise kann dadurch insgesamt ein zuverlässiger Schutz des Kühlmoduls 13 sowie ggf. dahinterliegender Fahrzeugkomponenten (z. B. eine Hochvoltbatterie) im Falle des Aufprallereignisses, insbesondere bei einem Frontalaufprall des Kraftfahrzeugs auf einen (z. B. vorausfahrenden) Sattelauflieger, erreicht werden.

Im Folgenden soll nun speziell auf die charakteristischen Merkmale der jeweiligen Ausführungsformen der Figuren 1 bis 5 eingegangen werden, wobei die entsprechenden Figuren jeweils verschiedene Ansichten (z. B. Front-, Seiten-, Pseudo-3D-Ansichten) derselben Ausführungsform zeigen. Aus Gründen der Übersichtlichkeit sind dabei nicht in allen Ansichten alle dargestellten Komponenten separat referenziert. Hierfür wird auf eine entsprechende Zusammenschau der einzelnen Ansichten verwiesen. Weiterhin sind zur besseren Sichtbarkeit aller Details der Crash-Strukturen 14 nicht in allen gezeigten Ansichten das optionale Kühlmodul 13 dargestellt.

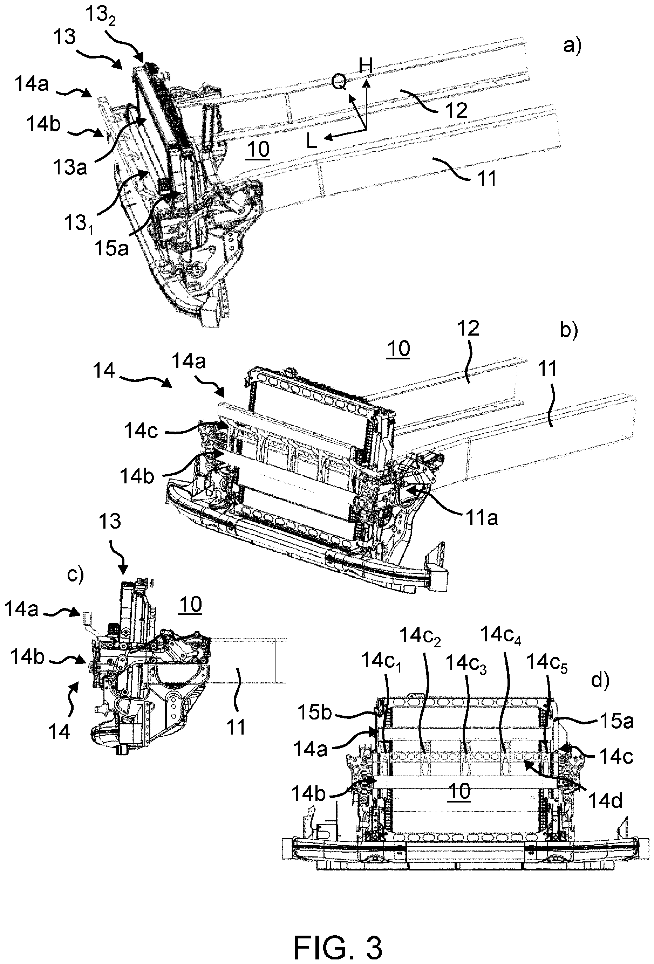

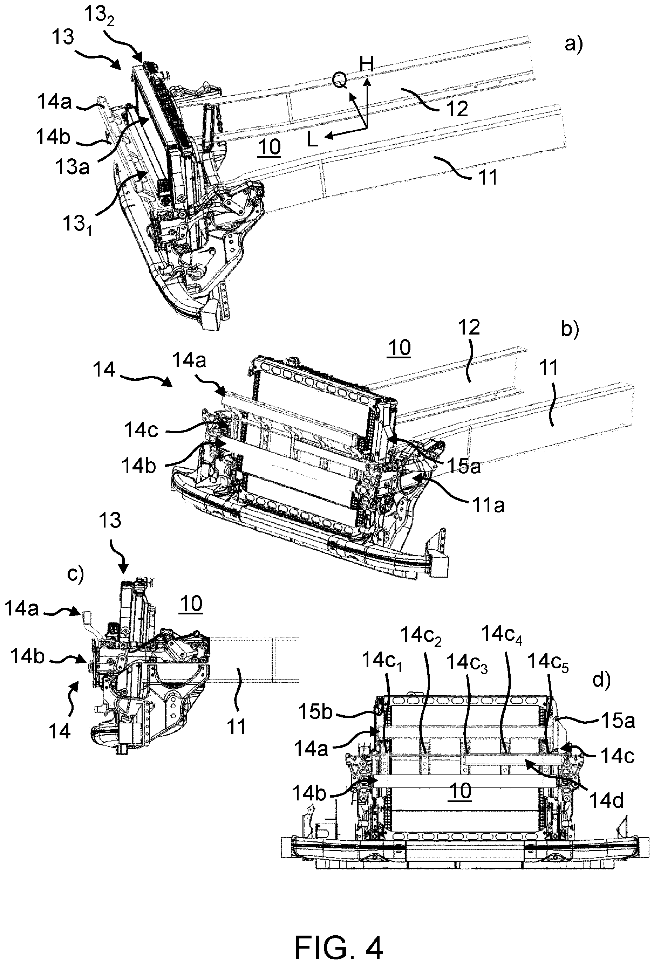

Figur 1 zeigt eine schematische Darstellung einer Vorbaustruktur 10 gemäß einer ersten Ausführungsform. Das erste Deformationselement 14a der Crash-Struktur 14 weist hierbei mehrere, vorliegend beispielhaft vier, Lamellen 16a, 16b, 16c, 16d auf. Die, vorzugsweise aus Flachstahl gefertigten, Lamellen 16a, 16b, 16c, 16d können dabei-wie vorliegend beispielhaft dargestellt - äquidistant beabstandet übereinander angeordnet sein. Bevorzugt sind die Lamellen 16a, 16b, 16c, 16d dabei äquidistant planparallel höhenversetzt zueinander angeordnet, d. h. entlang einer Hochachse H der Vorbaustruktur 10 jeweils in gleichem Abstand zueinander verschoben angeordnet. Mit anderen Worten kann das erste Deformationselement 14a gleichartig angeordneten Lamellen 16a, 16b, 16c, 16d umfassen. Zur Halterung der Lamellen 16a, 16b, 16c, 16d ist vorliegend beispielhaft vorgesehen, dass die Vorbaustruktur 10 einen ersten Kühlerträger 15a und einen zweiten Kühlerträger 15b (z. B. jeweils in Form eines im Wesentlichen vertikal orientierten Stahlträgers) aufweist, wobei das Kühlmodul 13 mittels des ersten Kühlerträgers 15a am ersten Rahmen-Längsträger 11 und mittels des zweiten Kühlerträgers 15b am zweiten Rahmen-Längsträger 12 gehaltert sein kann. Beispielsweise kann dabei -wie vorliegend dargestellt- die der erste und zweite Kühlerträger 15a, 15b jeweils seitlich am Kühlmodul 13 angeordnet sein. Zudem oder alternativ kann der erste und/oder zweite Kühlerträger 15a, 15b senkrecht zum ersten und/oder zweiten Rahmen-Längsträger 11, 12 orientiert sein. Auf vorteilhafte Weise kann dadurch der erste und/oder zweite Kühler 13₁, 13₂ des Kühlmoduls 13 auf dem ersten und/oder zweiten Rahmen-Längsträger 11, 12 abgestützt und damit sicher gehaltert werden. Weiterhin kann vorgesehen sein, dass das erste Deformationselement 14a bzw. die Lamellen 16a, 16b, 16c, 16d am ersten und/oder zweiten Kühlerträger 15a, 15b befestigt ist. Bevorzugt weisen die mehreren Lamellen 16a, 16b, 16c, 16d hierzu jeweils ein erstes Lamellenende 16a₁, 16b₁, 16c₁, 16d₁ und ein, vorzugsweise dem ersten Lamellenende 16a₁, 16b₁, 16c₁, 16d₁ gegenüberliegendes, zweites Lamellenende 16a₂, 16b₂, 16c₂, 16d₂ auf, wobei die entsprechenden Bezugszeichen aus Gründen der Übersichtlichkeit in Figur 1 beispielhaft nur für die Lamelle 16d eingezeichnet sind (siehe z. B. Absicht d). Hierbei kann jeweils das erste Lamellenende 16a₁, 16b₁, 16c₁, 16d₁ am ersten Kühlerträger 15a und/oder das zweite Lamellenende 16a₂, 16b₂, 16c₂, 16d₂ am zweiten Kühlerträger 15b befestigt (z. B. angeschraubt, angenietet und/oder angeschweißt) sein. In einer besonders vorteilhaften Ausführungsform können die Lamellen 16a, 16b, 16c, 16d - wie beispielhaft dargestellt- jeweils U-förmig ausgebildet sein und dabei einen geraden Mittelabschnitt und zwei gebogene Endabschnitte aufweisen, wobei die jeweiligen Endabschnitte jeweils ein entsprechendes Lamellenende 16a₁, 16b₁, 16c₁, 16d₁,16a₂, 16b₂, 16c₂, 16d₂ umfassen können. Insgesamt kann durch die vorstehend beschriebene Ausführung des ersten Deformationselements 14a auf vorteilhafte Weise eine stabile Lagerung des ersten Deformationselements 14a ermöglicht werden, während gleichzeitig der Kühlluftstrom zum Kühlmodul 13 durch die Halterung des ersten Deformationselements 14a möglichst wenig beeinflusst wird. Optional kann die Crash-Struktur 14 ferner ein zweites Deformationselement 14b (z. B. in Form eines Rundrohrs) umfassen, das beispielsweise vor dem Kühlmodul 13 und auf Höhe des ersten und/oder zweiten Rahmen-Längsträgers 11, 12 angeordnet sein kann. Dieses wird im Zusammenhang mit den Figuren 3 und 4 noch eingehender beschrieben werden.

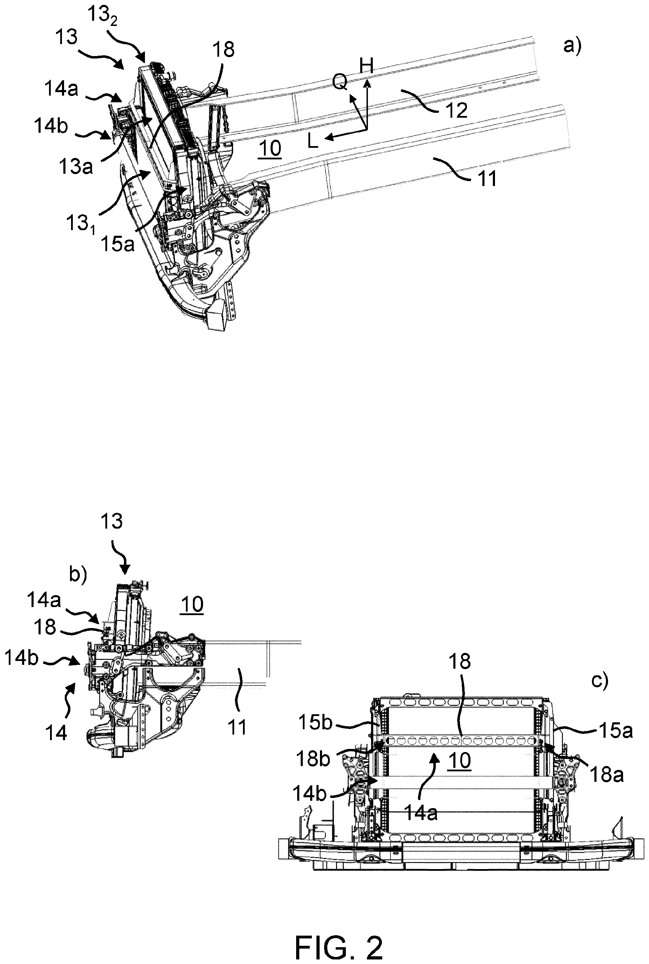

Figur 2 zeigt eine schematische Darstellung einer Vorbaustruktur 10 gemäß einer zweiten Ausführungsform. Im Gegensatz zu der vorherigen mehrteiligen Ausführung in Form mehrerer Lamellen 16a, 16b, 16c, 16d (Figur 1) weist das erste Deformationselement 14a der Crash-Struktur 14 vorliegend beispielhafte nur einen, vorzugsweise aus Profilstahl gefertigten, Profilträger 18 auf. Lediglich beispielhaft kann dieser Profilträger 18 - wie dargestellt - ein gelochtes Doppel-T-Profil aufweisen. Auf vorteilhafte Weise kann dadurch zum einen eine Gewichtsreduktion des ersten Deformationselements 14a erreicht werden, andererseits kann dadurch eine ausreichende Kühlluftzufuhr zum Kühlmodul 13 sichergestellt werden, da Kühlluft z. B. über die kreisförmigen Aussparungen zum Kühlmodul 13 gelangen kann. Wie im Fall der vorstehend beschrieben ersten Ausführungsform kann auch vorliegend die Halterung des Profilträgers 18 wiederum beispielsweise über Kühlerträger 15a, 15b erfolgen. Entsprechend kann die Vorbaustruktur 10 auch hier einen ersten Kühlerträger 15a und einen zweiten Kühlerträger 15b (z. B. jeweils in Form eines im Wesentlichen vertikal orientierten Stahlträgers) aufweisen, wobei das Kühlmodul 13 mittels des (z. B. seitlich am Kühlmodul 13 angeordneten) ersten Kühlerträgers 15a am ersten Rahmen-Längsträger 11 und mittels des (z. B. seitlich am Kühlmodul 13 angeordneten) zweiten Kühlerträgers 15b am zweiten Rahmen-Längsträger 12 gehaltert sein kann. Weiterhin kann vorgesehen sein, dass das erste Deformationselement 14a bzw. der Profilträger 18 am ersten und/oder zweiten Kühlerträger 15a, 15b befestigt ist. Bevorzugt weist der Profilträger 18 dazu ein erstes Profilträgerende 18a und ein, vorzugsweise dem ersten Profilträgerende 18a gegenüberliegenden, zweites Profilträgerende 18b auf. Bei dem ersten und zweiten Profilträgerende 18a, 18b kann es sich bevorzugt jeweils um ein distales Ende des Profilträgers 18 handeln. Hierbei kann das erste Profilträgerende 18a am ersten Kühlerträger 15a und/oder das zweite Profilträgerende 18b am zweiten Kühlerträger 15b befestigt (z. B. angeschraubt, angenietet und/oder angeschweißt) sein. Besonders bevorzugt kann der Profilträger 18 auch ausschließlich am ersten und/oder zweiten Kühlerträger 15a, 15b befestigt sein, sodass keine weiteren Anbindungs- bzw. Halterungsstellen des Profilträgers 18 außer die Vorgenannten bestehen können. Optional kann auch hier-wie beispielhafte dargestellt - die Crash-Struktur 14 ferner ein zweites Deformationselement 14b (z. B. in Form eines Rundrohrs) umfassen, das z. B. vor dem Kühlmodul 13 und auf Höhe des ersten und/oder zweiten Rahmen-Längsträgers 11, 12 angeordnet sein kann.

Figur 3 zeigt eine schematische Darstellung einer Vorbaustruktur 10 gemäß einer dritten Ausführungsform. Die Crash-Struktur 14 weist hierbei zusätzlich zum oben beschriebenen ersten Deformationselement 14a ein zweites Deformationselement 14b (z. B. in Form eines Rundrohrs) auf. Dieses zweite (z. B. aus Stahl oder aus kohlenstofffaserverstärktem Kunststoff (CFK) bestehende) Deformationselement 14b kann dabei - wie das erste Deformationselement 14a - bei einem, vorzugsweise vorbestimmten, Aufprallereignis (z. B. bei einem Frontalaufprall) unter Abbau von Aufprallkräften deformierbar sein. Im Gegensatz zum ersten Deformationselement 14a, welches sich oberhalb der beiden Rahmen-Längsträger 11, 12 erstreckt, soll das zweite Deformationselement 14b bevorzugt auf Höhe des ersten und/oder zweiten Rahmen-Längsträgers 11, 12 und damit tiefer als das erste Deformationselement 14a angeordnet sein. D. h. das zweite Deformationselement 14b kann sich somit bezüglich einer Hochachse H der Vorbaustruktur 10 zumindest abschnittsweise auf derselben Höhe wie der erste und/oder zweite Rahmen-Längsträger 11, 12 befinden. Auf vorteilhafte Weise kann durch das entsprechende Vorsehen von zwei höhenversetzt angeordneten Deformationselementen 14a und 14b ein möglichst umfassender Schutz des dahinter angeordneten Kühlmoduls 13 erreicht werden. Bevorzugt ist vorgesehen, dass sich auch das zweite Deformationselement 14b quer zum ersten und/oder zweiten Rahmen-Längsträger 11, 12 erstreckt und/oder den ersten und zweiten Rahmen-Längsträger 11, 12 miteinander verbindet. Lediglich beispielhaft kann das zweite Deformationselement 14b dazu z. B. als ein, vorzugsweise im Wesentlichen senkrecht zum ersten und zweiten Rahmen-Längsträger 11, 12 orientiertes, rohrförmiges Profil mit konzentrischem, rechteckigem, ovalem oder anderem geschlossenen Querschnitt ausgeführt sein, welches sowohl am ersten als auch am zweiten Rahmen-Längsträger 11, 12 gehaltert ist. Weiterhin kann das zweite Deformationselement 14b vor, vorzugsweise unmittelbar vor, dem Kühlmodul 13 angeordnet sein. D. h. bevorzugt sollen keine weiteren Fahrzeugkomponenten (wie z. B. ein Motor, Druckluftanlage, etc.) zwischen dem zweiten Deformationselement 14b und dem Kühlmodul 13 angeordnet sein.

Bevorzugt ist hierbei vorgehen, dass die Crash-Struktur 14 eine Halterung 14c umfasset, mittels derer das erste Deformationselement 14a am zweiten Deformationselement 14b gehaltert ist. Vorzugsweise ist das erste Deformationselement 14a dabei ausschließlich am zweiten Deformationselement 14b gehaltert, d. h. bevorzugt sollen keine weiteren Anbindungs- bzw. Halterungsstellen des ersten Deformationselements 14a als die am zweiten Deformationselement 14b bestehen. Entsprechen kann in diesem Zusammenhang das zweite Deformationselement 14b z. B. als ein Kombielement verstanden werden, das sowohl zum Schutz des Kühlmoduls 13 als auch zur Halterung des ersten Deformationselements 14a dient. Hierbei kann die Halterung - wie beispielhaft dargestellt - mehrere (z. B. fünf), vorzugsweise vertikale, Halteelemente 14c₁, 14c₂, 14c₃, 14c₄, 14c₅ umfassen. Diese Halteelemente 14c₁, 14c₂, 14c₃, 14c₄, 14c₅ können dabei quer zu den Rahmen-Längsträgern 11, 12, vorzugsweise gleichmäßig, verteilt angeordnet sein. Weiterhin kann jedes der mehreren Halteelemente 14c₁, 14c₂, 14c₃, 14c₄, 14c₅ ein erstes Halteelementende und ein, vorzugsweise dem ersten Halteelementende gegenüberliegendes, zweites Halteelementende aufweisen, wobei jedes der ersten Halteelementenden jeweils am ersten Deformationselement 14a und jedes der zweiten Halteelementenden jeweils am zweiten Deformationselement 14b befestigt (z. B. angeschraubt, angenietet und/oder angeschweißt) sein kann. Besonders bevorzugt ist vorgehen, dass die Halteelemente 14c₁, 14c₂, 14c₃, 14c₄, 14c₅ - wie beispielhaft dargestellt-jeweils gekröpft ausgebildet sind, um dadurch das erste Deformationselement 14a, vorzugsweise planparallel, zum zweiten Deformationselement 14b nach vorne zu versetzen. Auf vorteilhafte Weise kann dadurch im Crash-Fall zunächst vorrangig ein Lasteintrag in das erste Deformationselement 14a erfolgen, der sodann über die Halterung 14c des ersten am zweiten Deformationselement 14b in den Rahmen bzw. die Rahmen-Längsträger 11,12 abgeleitet werden kann. Weiterhin kann so auf vorteilhafte Weise eine Anbindung des ersten Deformationselements 14a an die Vorbaustruktur 10 bereitgestellt werden, die im Crash-Fall eine direkte Lasteinleitung in den Rahmen bzw. die Rahmen-Längsträger 11, 12 unter Umgehen des Kühlmoduls 13 ermöglicht.

Um auf vorteilhafte Weise die Stabilität der Halterung 14c weiter zu erhöhen, kann die Halterung 14c zusätzlich optional eine Querstrebe 14d zur Versteifung der Halterung 14c aufweisen. Wie beispielhaft dargestellt kann ist, diese Querstrebe 14d dabei ein Profil, z. B. ein gelochtes Doppel-T-Profil, aufweisen, welches die Halteelemente 14c₁, 14c₂, 14c₃, 14c₄, 14cs, vorzugsweise quer zu den Rahmen-Längsträgern 11 und 12, miteinander verbindet. Beispielsweise kann sich die Querstrebe 14d quer, vorzugsweise senkrecht, zum ersten und/oder zweiten Rahmen-Längsträger 11, 12 erstrecken und/oder die beiden Rahmen-Längsträger 11, 12 miteinander verbinden. Bevorzugt ist die Querstrebe 14d dabei bezüglich einer Hochachse H der Vorbaustruktur 10 zwischen dem ersten Deformationselement 14a und dem zweiten Deformationselement 14b angeordnet. Mit anderen Worten kann die die Querstrebe 14d jeweils zwischen dem ersten und zweiten Halteelementende der jeweiligen Halteelemente 14c₁, 14c₂, 14c₃, 14c₄, 14c₅ befestigt sein.

Figur 4 zeigt eine schematische Darstellung einer Vorbaustruktur 10 gemäß einer vierten Ausführungsform. Die Ausführung gemäß Figur 4 entspricht dabei im Wesentlichen der von Figur 3 mit dem Unterschied, dass die optionale Querstrebe 14d zur Versteifung der Halterung 14c vorliegend nicht ein gelochtes Doppel-T-Profil wie in Figur 3, sondern ein weiteres Deformationselement aufweist, wobei dieses in Ansicht b) und d) nur zur Hälfe dargestellt ist. Dieses weitere Deformationselement (z. B. eine Crash-Strebe) - welches im Folgenden zur besseren Unterscheidbarkeit als drittes Deformationselement bezeichnet werden kann - kann dabei wie das erste und zweite Deformationselement 14a und 14b bevorzugt ein Bauteil sein, dessen vorrangiger oder ausschließlicher Zweck die gezielte Absorption von Aufprallenergien im Falle eines Crashs (z. B. durch ein Umwandeln in Verformungsarbeit) ist. Entsprechend kann auch das dritte Deformationselement bei einem, vorzugsweise vorbestimmten, Aufprallereignis (z. B. bei einem Frontalaufprall) unter Abbau von Aufprallkräften deformierbar sein. Das dritte Deformationselement (z. B. ein Hohlprofilträger) kann hierzu z. B. aus Stahl oder aus kohlenstofffaserverstärktem Kunststoff (CFK) bestehenden. Weiterhin kann sich das dritte Deformationselement - wie beispielhaft dargestellt - quer zum ersten und/oder zweiten Rahmen-Längsträger 11, 12 erstrecken (wobei nochmals darauf hingewiesen sei, dass in Ansicht b) und d) lediglich das halbe, des sich eigentlich über die gesamte Breite erstreckenden dritten Deformationselement dargestellt ist). Zudem oder alternativ kann das dritte Deformationselement bezüglich einer Hochachse H der Vorbaustruktur 10 zwischen dem ersten Deformationselement 14a und dem zweiten Deformationselement 14b angeordnet sein. Ferner kann das dritte Deformationselement ein offenes oder ein geschlossenes Profil aufweisen. Durch das Vorsehen von drei höhenversetzt angeordneten Deformationselementen kann auf vorteilhafte Weise insgesamt der Schutz des Kühlmoduls 13 sowie ggf. dahinter befindlicher Fahrzeugkomponenten weiter erhöht werden.

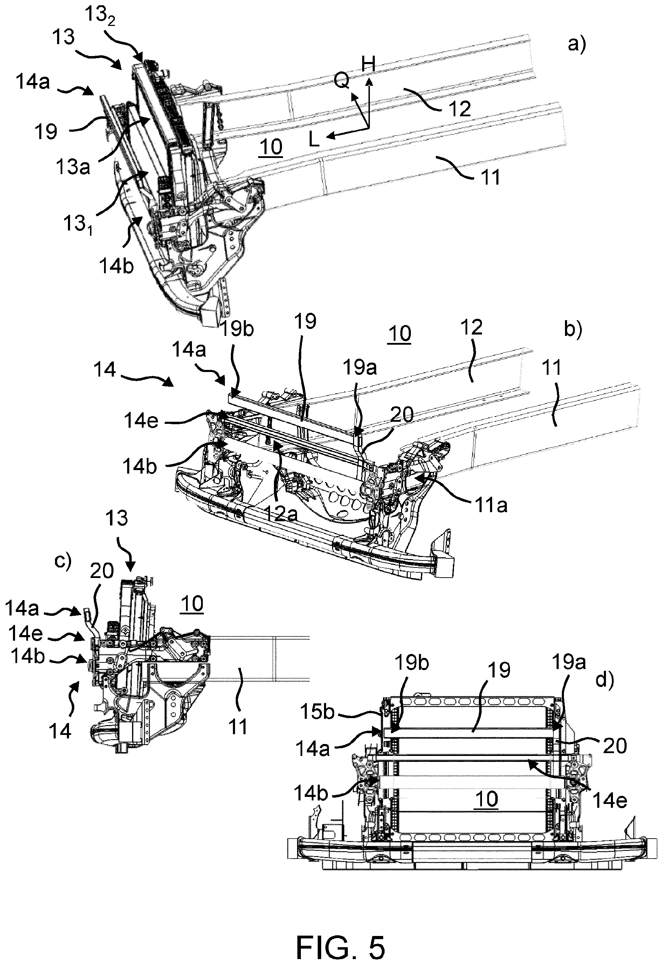

Figur 5 zeigt eine schematische Darstellung einer Vorbaustruktur 10 gemäß einer fünften Ausführungsform. Das erste Deformationselement 14a der Crash-Struktur 14 weist hierbei einen einseitig gehalterten Querträger 19 (z. B. ein offenes oder geschlossenes Profil) auf. Unter "einseitig" kann dabei bevorzugt verstanden werden, dass der Querträger 19 nur an einer Seite, vorzugsweise an nur einem Ende, gehaltert ist. Beispielsweise kann der Querträger 19 ein erstes Querträgerende 19a, das mit dem ersten Rahmen-Längsträger 11 verbunden sein kann, und ein, vorzugsweise dem ersten Querträgerende 19a gegenüberliegendes, freies zweites Querträgerende 19b aufweisen. Hierbei kann das erste Querträgerende 19a über ein, z. B. gekröpftes, Verbindungsstück 20 mit dem ersten Rahmen-Längsträger 11 und/oder mit dem zweiten Deformationselement 14b verbunden sein. Lediglich beispielhaft kann das Verbindungsstück 20 dabei im Wesentlichen vertikal, d. h. entlang der Hochachse H der Vorbaustruktur 10, orientiert sein und an mindestens zwei Stellen eine Biegung aufweisen, um dadurch den Querträger 19 insgesamt nach vorne, d. h. vom Kühlmodul 13 weg, zu versetzen. Entsprechend das Verbindungsstück 20 in diesem Zusammenhang vorzugsweise auch als "nach vorne ausgekröpftes" Verbindungsstück 20 bezeichnet werden.

Um auf vorteilhafte Weise die Stabilität der Halterung des Querträgers 19 zu erhöhen, kann die Crash-Struktur 14 ferner ein optionales viertes Deformationselement 14e aufweisen. Das vierte Deformationselement (z. B. ein offenes oder geschlossenes Profil) kann somit bei einem, vorzugsweise vorbestimmten, Aufprallereignis (z. B. bei einem Frontalaufprall) unter Abbau von Aufprallkräften deformierbar sein. Das vierte Deformationselement 14e kann ferner unterhalb und/oder, vorzugsweise planparallel, nach hinten versetzt zum vorgenannten Querträger 19 angeordnet sein. Bevorzugt verbindet das vierte Deformationselement 14e das Verbindungsstück 20 mit dem ersten und/oder zweiten Rahmen-Längsträger 11, 12. Lediglich beispielhafte kann das vierte Deformationselement 14e dazu bezüglich einer Hochachse H der Vorbaustruktur 10 zwischen dem ersten Deformationselement 14a (bzw. dem Querträger 19) und dem zweiten Deformationselement 14b angeordnet sein und/oder mittels eines ersten Deformationselementendes mit dem ersten Rahmen-Längsträger 11 und mittels eines, dem ersten Deformationselementendes gegenüberliegendes, zweites Deformationselementende mit dem zweiten Rahmen-Längsträger 12 (mittelbar oder unmittelbar) verbunden sein. Bevorzugt kann das vierte Deformationselement 14e somit den ersten und zweiten Rahmen-Längsträger 11, 12 miteinander verbinden. Ferner kann wiederum ein zweites Deformationselement 14b wie beispielsweise im Zusammenhang mit Figur 3 im Detail beschrieben vorgesehen sein.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 10: Vorbaustruktur
- 11: erster Rahmen-Längsträger
- 12: zweiter Rahmen-Längsträger
- 11a: erstes vorderes Ende
- 12a: zweites vorderes Ende
- 13: Kühlmodul
- 13a: oberen Kühlmodulbereich
- 13₁, 13₂: Kühler
- 14: Crash-Struktur
- 14a: erstes Deformationselement
- 14b: zweites Deformationselement
- 14c: Halterung
- 14c₁, 14c₂, 14c₃, 14c₄, 14c₅: Halteelemente
- 14d: Querstrebe
- 14e: viertes Deformationselement
- 15a: ersten Kühlerträger
- 15b: zweiter Kühlerträger
- 16a, 16b, 16c, 16d: Lamellen
- 16a₁, 16b₁, 16c₁, 16d₁: erstes Lamellenende
- 16a₂, 16b₂, 16c₂, 16d₂: zweites Lamellenende
- 18: Profilträger
- 18a: erstes Profilträgerende
- 18b: zweites Profilträgerende
- 19: Querträger
- 19a: erstes Querträgerende
- 19b: zweites Querträgerende
- 20: Verbindungsstück
- H: Hochachse
- L: Längsachse
- Q: Querachse

## Patentansprüche

1. Vorbaustruktur (10) für ein Kraftfahrzeug, vorzugsweise Nutzfahrzeug, aufweisend:
- einen ersten Rahmen-Längsträger (11) mit einem ersten vorderen Ende (11a);
- einen zweiten Rahmen-Längsträger (12) mit einem zweiten vorderen Ende (12a);
- ein Kühlmodul (13), das am ersten vorderen Ende (11a) des ersten Rahmen-Längsträgers (11) gelagert ist und das am zweiten vorderen Ende (12a) des zweiten Rahmen-Längsträgers (12) gelagert ist und das sich quer zum ersten und zweiten Rahmen-Längsträger (11, 12) erstreckt;
- eine Crash-Struktur (14) zum Schutz des Kühlmoduls (13) bei einem Aufprallereignis, vorzugsweise bei einem Frontalaufprall, wobei die Crash-Struktur (14) ein erstes Deformationselement (14a) aufweist, wobei das erste Deformationselement (14a) beim Aufprallereignis unter Abbau von Aufprallkräften deformierbar ist und die sich oberhalb und quer zum ersten und zweiten Rahmen-Längsträger (11, 12) erstreckt;
**dadurch gekennzeichnet, dass** das erste Deformationselement (14a), vorzugsweise unmittelbar, vor dem Kühlmodul (13) angeordnet ist.

2. Vorbaustruktur (10) nach Anspruch 1, **dadurch gekennzeichnet, dass** das Kühlmodul (13) einen oberen Kühlmodulbereich (13a) aufweist, der oberhalb des ersten und zweiten Rahmen-Längsträgers (11, 12) angeordnet ist, und dass das erste Deformationselement (14a) zumindest teilweise auf Höhe des oberen Kühlmodulbereichs (13a) angeordnet ist.

3. Vorbaustruktur (10) nach einem der vorherigen Ansprüche, **dadurch gekennzeichnet, dass** das erste Deformationselement (14a) ein Deformationselement zum Schutz des Kühlmoduls (13) bei einem Frontalaufprall des Kraftfahrzeugs auf einen Sattelauflieger, vorzugsweise bei einem Frontalaufprall des Kraftfahrzeugs auf ein Heck eines Sattelaufliegers, ist.

4. Vorbaustruktur (10) nach einem der vorherigen Ansprüche, **gekennzeichnet durch** einen ersten Kühlerträger (15a), mittels welches das Kühlmodul (13) am ersten Rahmen-Längsträger (11) gehaltert ist, und einen zweiten Kühlerträger (15b), mittels welches das Kühlmodul (13) am zweiten Rahmen-Längsträger (12) gehaltert ist, wobei das erste Deformationselement am ersten und zweiten Kühlerträger (15a, 15b) befestigt ist.

5. Vorbaustruktur (10) nach Anspruch 4, **dadurch gekennzeichnet, dass** das erste Deformationselement (14a) mehrere, vorzugsweise aus Flachstahl gefertigte, Lamellen (16a, 16b, 16c, 16d) aufweist.

6. Vorbaustruktur (10) nach Anspruch 5, **dadurch gekennzeichnet, dass** die mehreren Lamellen (16a, 16b, 16c, 16d)
a) zumindest drei, vorzugsweise zumindest vier, Lamellen (16a, 16b, 16c, 16d) umfassen; und/oder
b) beabstandet, vorzugsweise äquidistant beabstandet, übereinander angeordnet sind; und/oder
c) jeweils einen Querschnitt aufweisen, der in vertikaler Richtung eine geringere Ausdehnung als in horizontaler Richtung aufweist; und/oder
d) jeweils ein erstes Lamellenende (16a₁, 16b₁, 16c₁, 16d₁) und ein, vorzugsweise dem ersten Lamellenende (16a₁, 16b₁, 16c₁, 16d₁) gegenüberliegendes, zweites Lamellenende (16a₂, 16b₂, 16c₂, 16d₂) aufweisen, wobei jeweils das erste Lamellenende (16a₁, 16b₁, 16c₁, 16d₁) am ersten Kühlerträger (15a) und das zweite Lamellenende (16a₂, 16b₂, 16c₂, 16d₂) am zweiten Kühlerträger (15b) befestigt ist; und/oder
e) jeweils ausschließlich am ersten und zweiten Kühlerträger (15a, 15b) befestigt ist; und/oder
f) jeweils einen geraden Mittelabschnitt und zwei gebogene Endabschnitte umfassen.

7. Vorbaustruktur (10) nach einem der Ansprüche 4 bis 6, **dadurch gekennzeichnet, dass** das erste Deformationselement (14a) einen, vorzugsweise aus Profilstahl gefertigten, Profilträger (18) aufweist.

8. Vorbaustruktur (10) nach Anspruch 7, **dadurch gekennzeichnet, dass** der Profilträger (18)
a) ein, vorzugsweise gelochtes, U-Profil oder ein, vorzugsweise gelochtes, Doppel-T-Profil aufweist; und/oder
b) Aussparungen, vorzugsweise kreisförmige Aussparungen, zur Gewichtsreduktion aufweist; und/oder
c) ein erstes Profilträgerende (18a) und ein, vorzugsweise dem ersten Profilträgerende (18a) gegenüberliegenden, zweites Profilträgerende (18b) aufweist, wobei das ersten Profilträgerende (18a) am ersten Kühlerträger (15a) und das zweite Profilträgerende (18b) am zweiten Kühlerträger (15b) befestigt ist; und/oder
d) ausschließlich am ersten und zweiten Kühlerträger (15a, 15b) befestigt ist.

9. Vorbaustruktur (10) nach einem der vorherigen Ansprüche, **dadurch gekennzeichnet, dass** die Crash-Struktur (14) ein zweites Deformationselement (14b), vorzugsweise ein Rundrohr, aufweist, das beim Aufprallereignis, vorzugsweise bei einem Frontalaufprall, unter Abbau von Aufprallkräften deformierbar ist, wobei das zweite Deformationselement (14b) vordem Kühlmodul (13) und auf Höhe des ersten und zweiten Rahmen-Längsträgers (11, 12) angeordnet ist.

10. Vorbaustruktur (10) nach Anspruch 9, **dadurch gekennzeichnet,**
a) **dass** sich das zweite Deformationselement (14b) quer zum ersten und zweiten Rahmen-Längsträger (11, 12) erstreckt; und/oder
b) **dass** das zweite Deformationselement (14b) den ersten und zweiten Rahmen-Längsträger (11, 12) miteinander verbindet; und/oder
c) **dass** das zweite Deformationselement (14b) senkrecht zum ersten und zweiten Rahmen-Längsträger (11, 12) orientiert ist; und/oder
d) **dass** das zweite Deformationselement (14b) tiefer als das erste Deformationselement (14b) angeordnet ist.

11. Vorbaustruktur (10) nach einem der Ansprüche 9 oder 10, **dadurch gekennzeichnet, dass** die Crash-Struktur (14) eine Halterung (14c) umfasst, mittels derer das erste Deformationselement (14a) am zweiten Deformationselement (14b) gehaltert ist.

12. Vorbaustruktur (10) nach Anspruch 11, **dadurch gekennzeichnet, dass** die Halterung (14c) mehrere, vorzugsweise fünf, Halteelemente (14c₁, 14c₂, 14c₃, 14c₄, 14cs) umfasst,
- wobei die, vorzugsweise jeweils vertikal orientierten, mehreren Halteelemente (14c₁, 14c₂, 14c₃, 14c₄, 14c₅) quer zu den Rahmen-Längsträgern (11, 12), vorzugsweise gleichmäßig, verteilt angeordnet sind, und/oder
- wobei jedes der mehreren Halteelemente (14c₁, 14c₂, 14c₃, 14c₄, 14c₅) ein erstes Halteelementende aufweist, das am ersten Deformationselement (14a) befestigt ist, und ein zweites Halteelementende aufweist, das am zweiten Deformationselement (14b) befestigt ist.

13. Vorbaustruktur (10) nach Anspruch 12, **dadurch gekennzeichnet, dass** die Halteelemente (14c₁, 14c₂, 14c₃, 14c₄, 14c₅) gekröpft jeweils ausgebildet sind, derart, dass das erste Deformationselement (14a) nach vorne versetzt zum zweiten Deformationselement (14b) gehaltert ist.

14. Vorbaustruktur (10) nach Anspruch 12 oder 13, **dadurch gekennzeichnet, dass** die Halterung (14c) eine Querstrebe (14d) zur Versteifung der Halterung (14c) aufweist, wobei die Querstrebe (14d) die Halteelemente (14c₁, 14c₂, 14c₃, 14c₄, 14cs), vorzugsweise quer zu den Rahmen-Längsträgern (11, 12), miteinander verbindet.

15. Vorbaustruktur (10) nach Anspruch 14, **dadurch gekennzeichnet, dass** die Querstrebe (14d)
a) ein, vorzugsweise gelochtes, U-Profil oder ein, vorzugsweise gelochtes, Doppel-T-Profil aufweist; und/oder
b) Aussparungen, vorzugsweise kreisförmige Aussparungen, zur Gewichtsreduktion aufweist; und/oder
c) ein drittes Deformationselement, vorzugsweise einen Hohlprofilträger, aufweist, wobei das dritte Deformationselement beim Aufprallereignis, vorzugsweise bei einem Frontalaufprall, unter Abbau von Aufprallkräften deformierbar ist.

16. Vorbaustruktur (10) nach einem der vorherigen Ansprüche, **dadurch gekennzeichnet, dass** das erste Deformationselement (14a) einen einseitig gehalterten Querträger (19), vorzugsweise einen Hohlprofilträger, umfasst, aufweisend ein erstes Querträgerende (19a), das mit dem ersten Rahmen-Längsträger (11) verbunden ist und ein freies zweites Querträgerende (19b).

17. Vorbaustruktur (10) nach Anspruch 16, **dadurch gekennzeichnet,**
a) **dass** das erste Querträgerende (19a) über ein gekröpftes Verbindungsstück (20) mit dem ersten Rahmen-Längsträger (11) verbunden ist, vorzugsweise um den Querträger (19) nach vorne zu versetzen; und/der
b) **dass** der Querträger (19a) senkrecht zum ersten und zweiten Rahmen-Längsträger (11, 12) orientiert ist; und/oder
c) **dass** die Crash-Struktur (14) ein viertes Deformationselement (14e) aufweist, das unterhalb und nach hinten versetzt zum Querträger (19) angeordnet ist und den ersten und zweiten Rahmen-Längsträger (11, 12) miteinander verbindet.

18. Vorbaustruktur (10) nach einem der vorherigen Ansprüche, **dadurch gekennzeichnet, dass** das Kühlmodul (13) zumindest einen, vorzugsweise quaderförmigen, Kühler (13₁, 13₂) aufweist, wobei der zumindest eine Kühler (13₁, 13₂)
a) von einem, vorzugsweise gasförmigen und/oder flüssigen, Wärmeträger durchströmbar ist; und/oder
b) senkrecht zum ersten und zweiten Rahmen-Längsträger (11, 12) orientiert ist; und/oder
c) einen Ladeluftkühler und/oder einen Kühlmittelkühler umfasst; und/oder
d) einen vorderen ersten Kühler (13₁) und einen, vorzugsweise planparallel zum ersten Kühler angeordneten, hinteren zweiten Kühler (13₂) umfasst.

19. Kraftfahrzeug, vorzugsweise Nutzfahrzeug, aufweisend eine Vorbaustruktur (10) nach einem der vorherigen Ansprüche.
